# EUROPÄISCHE PATENTANMELDUNG

(11) **EP 4 175 299 A1**
(43) Veröffentlichungstag der Anmeldung: **03.05.2023**
(21) Anmeldenummer: 21206029.7
(22) Anmeldetag: 02.11.2021
(51) Int. Cl.: H04N 21/234, H04N 21/2665, H04N 21/845

(54) **BEARBEITUNG UND ÜBERTRAGUNG VON VIDEODATEN**

(71) Anmelder: Siemens Healthcare GmbH, 91052 Erlangen (DE)
(72) Erfinder: HARALD, Karl, 90765 Fürth (DE)

(57) **Zusammenfassung**

Die Erfindung betrifft eine integrierte Schaltanordnung (70), insbesondere FPGA oder ASIC, zur Bearbeitung und Übertragung von Daten, welche zumindest Videodaten (V1, V2, V3, V4, V5, V6, V7, V8) umfassen, in einem Netzwerk (20). Die integrierte Schaltanordnung (70) weist eine Anzahl von Videoschnittstellen (74, 75, 76, 77) zum Empfangen und/oder Versenden von Videodaten (V1, V2, V3, V4, V5, V6, V7, V8) in Datenströmen auf. Ferner umfasst sie eine Anzahl von Netzwerkschnittstellen (84, 85) zum Verbinden der integrierten Schaltanordnung (70) mit einer Anzahl von im Wesentlichen gleichen, räumlich getrennten, integrierten Schaltanordnungen (70) zur Übertragung von Daten (N), welche zumindest Videodaten (V1, V2, V3, V4) umfassen. Zudem weist sie eine Framebuffer-Steuerung (87) und eine Framebuffer-Schnittstelle (86) auf. Dabei steuert die Framebuffer-Steuerung Zugriffe auf einen Framebuffer (51), insbesondere einen Multi-Layer-Framebuffer (51), mittels der Framebuffer-Schnittstelle (86) so, dass Videodaten (V1, V2, V3, V4, V5, V6, V7, V8, V9, V10) aus einem oder mehreren Datenströmen als ein kombinierter Frame (F3, F4) von Videodaten (V1, V2, V3, V4, V5, V6, V7, V8, V9, V10) in den Framebuffer (51) gespeichert und/oder aus dem Framebuffer (51) ausgelesen werden können. Ferner umfasst die integrierte Schaltanordnung (70) eine Verbindungsmatrix (93), mit der Daten zwischen den zuvor genannten Komponenten ausgetauscht werden können. Dabei sind mittels eines konfigurierbaren Adressierungsschemas Routen einzelner Datenströme festgelegt. Die Erfindung betrifft ferner ein Netzwerkgerät (50), ein Netzwerk (20) sowie ein Verfahren zur Bearbeitung und Übertragung von Daten.

## Beschreibung

Die Erfindung betrifft eine integrierten Schaltanordnung, ein Netzwerkgerät und ein Netzwerk sowie ein Verfahren zur Bearbeitung und Übertragung von Daten, welche zumindest Videodaten umfassen.

In der Videotechnik werden zur Übertragung von Videosignalen üblicherweise zumindest die folgenden Schritte durchgeführt. Zunächst werden die Videosignale von einer Quelle, beispielsweise einer Kamera oder einem anderen Aufnahmegerät, eingelesen ("Capture"). Anschließend werden die Videosignale in einem weiteren Schritt in eine Senke, z.B. einen Monitor, ein Display oder einen Datenspeicher, ausgegeben. In der Praxis sind jedoch häufig nicht nur Punkt-zu-Punkt-Verbindungen wünschenswert, bei denen eine Quelle mit einer Senke verbunden wird, sondern in vielen Anwendungsfällen ist es auch erforderlich, dass Videosignale aus einer oder mehreren Quellen auf mehrere Senken verteilt werden ("Distribute"). Zwischen dem Einlesen und der Ausgabe der Videosignale werden diese in der Praxis häufig auch noch verarbeitet ("Compose"), also z.B. vergrößert, verkleinert, beschnitten, in eine andere Framerate konvertiert, zusammengeführt oder dergleichen.

Bisher werden die zuvor genannten Schritte durch eigenständige bzw. separate und spezialisierte Geräte durchgeführt. Das heißt, ein oder mehrere Geräte bilden Schnittstellen zu den Videoquellen. Ein oder mehrere Geräte bilden Schnittstellen zu den Videosenken. Zwischen den Videoquellen und den Videosenken ist zumindest ein Router als weiteres Gerät angeordnet und falls erforderlich sind zwischen den Quellen und den Senken noch weitere Geräte als Verarbeitungseinheiten angeordnet. Zur Übertragung und ggf. Bearbeitung der Videosignale müssen all diese Geräte zusammenwirken.

Zwischen den einzelnen Geräten, insbesondere zwischen einer Quelle und einer Senke, ist es oft wünschenswert, dass auch größere Distanzen überbrückt werden können, so dass die Originalschnittstellen (z.B. DP, HDMI) nicht ausreichen, da diese in der Regel nur eine begrenzte Reichweite von drei bis fünf Metern haben. Aufgrund der immer weiter steigenden Ansprüche an die Bildauflösung (HD, 4K), stellt es sich schwierig dar, diese Videosignale unkomprimiert und mit geringer Latenz über Standardnetzwerke wie beispielsweise Ethernet zu übertragen. Auch das aus der Praxis bekannte SDVoE, welches 10G Ethernet verwendet, muss bei einer Auflösung von 4K, 4:4:4, und 60 fps bereits eine Komprimierung durchführen.

Es ist somit eine Aufgabe der vorliegenden Erfindung, die Übertragung von unkomprimierten Videosignalen in einem Netzwerk mit geringer Latenz zu ermöglichen und/oder zu vereinfachen.

Diese Aufgabe wird von einer integrierten Schaltanordnung gemäß Patentanspruch 1, ein Netzwerkgerät gemäß Patentanspruch 10, ein Netzwerk gemäß Patentanspruch 12 sowie durch ein Verfahren zur Bearbeitung und Übertragung von Daten gemäß Patentanspruch 13 gelöst.

Die eingangs genannte integrierte Schaltanordnung ist insbesondere als ein integrierter Schaltkreis, z. B. in Form eines FPGA oder ASIC, ausgeführt und dient zur Bearbeitung und Übertragung von Daten, welche zumindest Videodaten umfassen, in einem Netzwerk. Die integrierte Schaltanordnung ist dabei insbesondere so ausgebildet, dass die Daten - wenn gewünscht - unkomprimiert übertragen werden können. Dazu weist sie eine Anzahl von Videoschnittstellen zum Empfangen und/oder Versenden von den Videodaten in Datenströmen auf. Sie umfasst zudem eine Anzahl von Netzwerkschnittstellen zum Verbinden der integrierten Schaltanordnung mit einer Anzahl von im Wesentlichen gleichen, räumlich getrennten, integrierten Schaltanordnungen zur Übertragung von Daten, welche zumindest Videodaten umfassen. Ferner umfasst die integrierte Schaltanordnung eine

Framebuffer-Steuerung und eine Framebuffer-Schnittstelle. Dabei steuert die Framebuffer-Steuerung Zugriffe auf einen Framebuffer mittels der Framebuffer-Schnittstelle so, dass Videodaten aus einem oder mehreren Datenströmen als ein kombinierter Frame von Videodaten in den Framebuffer gespeichert und/oder aus dem Framebuffer ausgelesen werden können. Mittels einer Verbindungsmatrix der integrierten Schaltanordnung können die Daten zwischen den zuvor genannten Komponenten ausgetauscht werden. Dabei sind mittels eines konfigurierbaren Adressschemas Routen einzelner Datenströme festgelegt.

Eine Ausführung der integrierten Schaltanordnung als FPGA ist besonders flexibel, da der FPGA je nach Anwendungsfall noch konfiguriert werden kann. Eine Ausführung des integrierten Schaltanordnung als ASIC ist, insbesondere bei hohen Stückzahlen, kostengünstig herzustellen.

Bei den Videoschnittstellen kann es sich grundsätzlich um beliebige Videoschnittstellen handeln, beispielsweise um digitale Schnittstellen, wie z. B. DP, DVI, HDMI, SDI oder dergleichen, oder um analoge Schnittstellen, wie z. B. VGA-, XGA-, S-Video oder dergleichen. Sie sind bevorzugt dazu ausgebildet, das Videosignal unkomprimiert zu empfangen bzw. zu versenden. Die Anzahl der Videoschnittstellen kann je nach Bedarf konfiguriert werden. Das heißt, dass die integrierte Schaltanordnung je nach Anwendungsfall z.B. lediglich Videoschnittstellen zum Empfang von Videosignalen oder lediglich Videoschnittstellen zum Versenden von Videosignalen oder eine beliebige Kombination dieser Videoschnittstellen umfassen kann. Zumindest ist jedoch eine dieser Videoschnittstellen von der integrierten Schaltanordnung umfasst. Bevorzugt weist die integrierte Schaltanordnung jedoch sowohl eine Anzahl von Videoschnittstellen zum Empfang als auch eine Anzahl von Videoschnittstellen zum Versenden von Videosignalen auf. Der Begriff "Anzahl" bedeutet allgemein im Rahmen dieser Erfindung "ein oder mehrere".

Die Videodaten liegen üblicherweise in Form von Datenströmen (auch Videoströme bzw. Videostreams) vor, in denen eine Bildsequenz der Videodaten bildweise und pixelweise seriell übertragen wird.

Mittels der Netzwerkschnittstellen wird die integrierte Schaltanordnung bzw. das Netzwerkgerät, das ihn umfasst, mit weiteren, insbesondere erfindungsgemäßen, integrierten Schaltanordnungen verbunden. Dass diese Schaltanordnungen "im Wesentlichen gleich" sind, bedeutet, dass sie sich gegebenenfalls in der Anzahl und/oder Ausgestaltung ihrer Videoschnittstellen, Netzschnittstellen und/oder Videoverarbeitungseinheiten unterscheiden, ansonsten jedoch gleichartig ausgestaltet sind.

Die Framebuffer-Steuerung steuert Zugriffe auf einen Framebuffer mittels der Framebuffer-Schnittstelle derart, dass Videodaten aus einem oder mehreren Datenströmen als ein kombinierter Frame von Videodaten in den Framebuffer gespeichert und/oder aus dem Framebuffer ausgelesen werden können.

Die Framebuffer-Steuerung und die Framebuffer-Schnittstelle ermöglichen es mit anderen Worten also, unterschiedliche eingehende Videosignale zu einem gemeinsamen Videosignal zu kombinieren. Bei dem Frame handelt es sich also um ein Einzelbild, das - insbesondere mit der der Übertragung zugrundeliegenden Framerate - in dem Framebuffer hinterlegt und aus ihm ausgelesen wird. Eine Sequenz der einzelnen, kombinierten Frames bildet somit das kombinierte Videosignal. Mittels der Framebuffer-Steuerung und der Framebuffer-Schnittstelle, die mit dem Framebuffer zusammenwirken, können somit einzelne Videosignale, besonders bevorzugt nach den Vorgaben eines Benutzers, zu einem neuen, kombinierten Videosignal zusammengestellt werden ("Compose").

Die Verbindungsmatrix ist, insbesondere als Multi-Layer-Matrix, so ausgelegt bzw. dimensioniert, dass sie die Daten der mit ihr verbundenen Komponenten unabhängig voneinander und parallel, insbesondere anhand einer Komponentenadresse, an die jeweilige Zielkomponente weiterleiten kann. Sie kann hierzu beispielsweise ähnlich einem AXI-Bus ausgebildet sein.

Die integrierte Schaltanordnung wird bevorzugt in einem statischen - d. h. im Betrieb werden üblicherweise keine Netzwerkgeräte hinzugefügt und/oder entfernt - Netzwerk mit bekannter, im Betrieb gleichbleibender Topologie eingesetzt. Dementsprechend sind die - bevorzugt optimalen - Routen zwischen den einzelnen Netzwerkgeräten und deren jeweiligen Komponenten bekannt, so dass das Adressierungsschema bei der Auslegung oder bei der Installation des Netzwerkes erstellt werden kann. Darauffolgend kann das Adressierungsschema im Betrieb weiterhin noch derart konfiguriert werden, dass einzelne Bildbearbeitungsprozesse bzw. Videobearbeitungseinheiten zugeschaltet oder abgeschaltet werden können. Zudem kann mittels der Konfiguration des Adressierungsschemas gewählt werden, von welcher Quelle das Videosignal an welche Senke(n) übertragen wird und welche Route es dabei ggf. durch weitere Netzwerkgeräte und deren Komponenten zurücklegt. Die Topologie des Netzwerks kann aber grundsätzlich auch durch Hinzufügen und/oder Entfernen von Netzwerkgeräten nach Bedarf verändert werden; dann ist jedoch eine neue Konfiguration des Netzwerks, insbesondere des Adressierungsschemas erforderlich.

Das eingangs genannte Netzwerkgerät weist eine erfindungsgemäße integrierte Schaltanordnung und physikalische Schnittstellen auf, die mit den entsprechenden Schnittstellen der integrierten Schaltanordnung verbunden sind. Je nach Schnittstelle kann das Netzwerkgerät also mit Videoquellen, Videosenken, weiteren Netzwerkgeräten und bevorzugt unter Verwendung weiterer geeigneter Schnittstellen auch mit zusätzlichen Geräten wie z. B. USB-Geräten, Rechnereinheiten bzw. PCs oder dergleichen verbunden werden.

Die Videoquellen können grundsätzlich beliebige Vorrichtungen sein, die Videosignale ausgeben. Sie können beispielsweise Kameras, medizintechnisch bildgebende Modalitäten, wie z. B. Röntgengeräte, Computertomographen, Magnetresonanztomographen, Ultraschallgeräte oder dergleichen, von Software und/oder Messegeräten, wie z. B. EKG, EEG oder dergleichen, erzeugte Videosignale, Videosignale, die von Datenspeichern abgerufen werden, oder dergleichen umfassen. Als Videosenken dienen grundsätzlich beliebige Vorrichtungen, die Videosignale ausgeben. Sie können beispielsweise Monitore, Displays oder andere Anzeigevorrichtungen, Datenspeicher, eine Verbindung zu einem externen Netzwerk oder dergleichen umfassen. Die USB-Geräte können zum einen Eingabegeräte wie z. B. Maus, Tastatur, Touchpads oder dergleichen umfassen.

Durch diese Komponenten wird das eingangs genannte Netzwerk gebildet, in dem unter anderem hochauflösende Videosignale übertragen werden. Es umfasst eine Anzahl von erfindungsgemäßen Netzwerkgeräten, welche in einer bekannten Netzwerktopologie miteinander verbunden sind. Gegebenenfalls umfasst es, wie oben beschrieben, zusätzlich noch weitere Komponenten. Das bedeutet, dass das Netzwerk und seine Topologie für den jeweiligen Anwendungsfall konfiguriert und parametrisiert ist. Die Netzwerkgeräte ihre Komponenten und ihre Verbindungen untereinander sind somit bekannt und werden bei der, bevorzugt automatisch optimierten, Erstellung des Adressschemas berücksichtigt. Für jeden Datenstrom wird mittels des Adressschemas von der Quelle bis zur Senke eine Route durch das Netzwerk festgelegt.

Das eingangs genannte Verfahren zur Bearbeitung und Übertragung von Daten, welche zumindest hochauflösende Videodaten umfassen, in einem Netzwerk umfasst folgende Schritte, welche mittels einer integrierten Schaltanordnung implementiert sind. In einem Schritt werden zumindest hochauflösenden Videodaten in Datenströmen empfangen und/oder versendet. In einem weiteren sind wird die integrierte Schaltanordnung mit einer Anzahl von im Wesentlichen gleichen, räumlich getrennten, integrierten Schaltanordnungen mittels der Netzwerkschnittstellen in dem Netzwerk zur Übertragung von Daten verbunden. Die Videodaten werden in einem weiteren Schritt aus einem oder mehreren Datenströmen als ein kombinierter Frame von Videodaten in einem Framebuffer gespeichert und/oder daraus ausgelesen. Ferner werden die Daten zwischen Komponenten der integrierten Schaltanordnung mittels einer Verbindungsmatrix in einem Verfahrensschritt ausgetauscht. Dabei sind mittels eines konfigurierbaren Adressierungsschemas Routen einzelner Datenströme festgelegt.

Dabei ist die Reihenfolge der Schritte nicht festgelegt und die Schritte laufen im bestimmungsgemäßen Betrieb üblicherweise parallel ab. Je nach Auslegung kann also ein Netzwerkgerät seriell Videodaten von einer oder mehreren Quellen empfangen und diese dann seriell zu einem oder mehreren weiteren Netzwerkgeräten weiterleiten. Alternativ kann es Videodaten seriell aus dem Netzwerk empfangen und diese seriell an eine oder mehrere Videosenken weiterleiten. Ebenso ist möglich, dass beide Prozesse parallel in einem Netzwerkgerät ausgeführt werden und/oder dass parallel eine Bearbeitung eines oder mehrerer Videostreams erfolgt.

Ein Großteil der zuvor genannten Komponenten des Netzwerkgeräts, können ganz oder teilweise in Form von integrierten Schaltkreisen bzw. Logikanordnungen realisiert werden.

Grundsätzlich können diese Komponenten aber auch zum Teil, insbesondere wenn es um besonders schnelle Berechnungen geht, in Form von softwareunterstützter Hardware, beispielsweise FPGAs, ASICs oder dergleichen, realisiert sein. Ebenso können die benötigten Schnittstellen, beispielsweise wenn es nur um eine Übernahme von Daten aus anderen Softwarekomponenten geht, als Softwareschnittstellen ausgebildet sein. Sie können aber auch als hardwaremäßig aufgebaute Schnittstellen ausgebildet sein, die durch geeignete Software angesteuert werden.

Eine weitgehend softwaremäßige Realisierung hat den Vorteil, dass auch schon bisher verwendete Netzwerkgeräte auf einfache Weise durch teilweise Umrüstung und ein Software-Update bzw.

Umkonfigurierung der integrierten Schaltanordnung (FPGAs) nachgerüstet werden können, um auf die erfindungsgemäße Weise zu arbeiten. Insofern wird die Aufgabe auch durch ein entsprechendes Computerprogrammprodukt gelöst, welches in eine programmierbare Logikanordnung eines Netzwerkgeräts konfigurierbar ist, mit Programmabschnitten bzw. logischen Anweisen, um Schritte des erfindungsgemäßen Verfahrens auszuführen, wenn die Logik dem Netzwerkgerät ausgeführt wird. Ein solches Computerprogrammprodukt kann neben dem Computerprogramm gegebenenfalls zusätzliche Bestandteile wie z. B. eine Dokumentation und / oder zusätzliche Komponenten, auch Hardware-Komponenten, wie z. B. Hardware-Schlüssel (Dongles etc.) zur Nutzung der Software, umfassen.

Zum Transport zum Netzwerkgerät und/oder zur Speicherung in dem Netzwerkgerät kann ein computerlesbares Medium, beispielsweise ein Memory-Stick, eine Festplatte oder ein sonstiger transportabler oder fest eingebauter Datenträger dienen, auf welchem die auf der integrierten Schaltanordnung programmierbaren und ausführbaren Programmabschnitte des Computerprogramms gespeichert sind. Die integrierte Schaltanordnung kann z. B. hierzu einen oder mehrere zusammenarbeitende logische Elemente oder dergleichen aufweisen.

Weitere, besonders vorteilhafte Ausgestaltungen und Weiterbildungen der Erfindung ergeben sich aus den abhängigen Ansprüchen sowie der nachfolgenden Beschreibung, wobei die Ansprüche einer Anspruchskategorie auch analog zu den Ansprüchen und Beschreibungsteilen zu einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Die integrierte Schaltanordnung umfasst bevorzugt eine Anzahl von Videobearbeitungseinheiten, welche zur Bearbeitung der Videodaten konfigurierbar sind.

Sie sind bevorzugt so ausgebildet, dass sie jeweils einen typischen Videobearbeitungsprozess auf der Schaltanordnung ausführen können bzw. ausführen. Insbesondere erfolgt dies jeweils für einen Videodatenstrom bzw. Videostream. Dies erfolgt insbesondere unabhängig von den anderen Videodatenströmen. Die typischen Videobearbeitungsprozesse umfassen unter anderen eine Skalierung, z.B. der Auflösung, des Farbraums oder der Framerate, eine Ausschnitterzeugung, eine Filterung, z.B. von Farbe, Rauschen oder dergleichen, eine Linienkonstruktion, eine Komprimierung oder eine Dekomprimierung. Diese Bildbearbeitungsprozesse und ihre softwaremäßige bzw. hardwaremäßige Umsetzung sind dem Fachmann bekannt. Die Videobearbeitungseinheiten können so konfiguriert werden, dass z. B. ein Skalierungsfaktor eingestellt wird, eine Größe und/oder Position eines Bildausschnitts eingestellt wird, Filterkoeffizienten eingestellt werden oder dergleichen

Die Videobearbeitungseinheiten sind bevorzugt zur Skalierung, Ausschnitterzeugung, Filterung, Linienrekonstruktion, Komprimierung und/oder Dekomprimierung ausgebildet sind.

Die Videobearbeitungseinheiten sind also mittels der integrierten Schaltanordnung ausgeführt und arbeiten somit sehr Zeiteffizient. Dadurch kann die Latenz insgesamt geringgehalten werden. Dabei umfasst die Skalierung bevorzugt eine Skalierung der Auflösung, der Framerate und/oder des Farbraums. Die Filterung umfasst vorzugsweise einen Farbfilter, einen Kontrastfilter, einen Kantenfilter und/oder einen Rauschfilter. Die softwaremäßige und/oder die hardwaremäßige Ausführung der Videobearbeitungseinheiten ist dem Fachmann dem Grunde nach bekannt.

Besonders bevorzugt sind die Videobearbeitungseinheiten zu genau einem dieser Prozesse ausgebildet. Das heißt, die Videobearbeitungseinheiten sind jeweils zur Skalierung, Ausschnitterzeugung, Filterung, Linienrekonstruktion, Komprimierung oder Dekomprimierung ausgebildet. Dadurch ist ein möglich die Prozesse nach Bedarf einzeln auf das Videosignal anzuwenden. Dabei können jedoch mehrere der Videobearbeitungseinheiten nacheinander auf das Videosignal wirken, wodurch im Ergebnis weiterhin eine Kombination der einzelnen Prozesse erzielt wird.

Bevorzugt weisen die Netzwerkschnittstellen eine Datenrate größer oder gleich 5 Gbit/s, bevorzugt größer oder gleich 10 Gbit/s, auf. Mit einer Datenrate von 5 Gbit/s können HD-Videosignale unkomprimiert übertragen werden. Für 4K-Videosignale werden für die unkomprimierte Übertragung bevorzugt zwei Netzwerkschnittstellen mit einer Datenrate von jeweils 10 Gbit/s gebündelt bzw. kombiniert.

Die physikalischen Schnittstellen eines Netzwerkgerätes, insbesondere die Netzwerkschnittstellen, sind bevorzugt als Steckplätze ausgestaltet. Sie können je nach Bedarf, z. B. mittels SFP-Modulen, bestückt werden. Dadurch kann die Bandbreite des Netzwerkes angepasst und Kosten für nicht notwendige Schnittstellen können vermieden werden.

Bevorzugt kann also allgemein eine Anzahl von Netzwerkschnittstellen, also beispielsweise zwei oder vier Netzwerkschnittstellen, die mit derselben weiteren integrierte Schaltanordnung verbunden werden, gebündelt werden, um eine entsprechend höhere Bandbreite für das zu übertragende Videosignal bereitzustellen.

Bevorzugt umfassen die Videodaten zumindest hochauflösende Videodaten bzw. Videosignale (gemäß HD-Video-Standard). Darunter werden im Sinne der Erfindung Videodaten verstanden, die zumindest HDTV-übliche Bildauflösung von 1280x720 Pixel bei einer Bildwiederholungsrate bzw. Framerate von 50 fps aufweisen. Bevorzugt beträgt die Auflösung jedoch 1920x1080 Pixel. Selbstverständlich können mittels der integrierten Schaltanordnung auch weiterhin niedriger auflösende Videosignale bearbeitet und übertragen werden.

Besonders bevorzugt umfassen die Videodaten ultrahochauflösende Videodaten (gemäß UHD-Video-Standard). Unter "ultrahochauflösenden Videodaten" sind Videodaten mit einer Auflösung von 4K oder mehr zu verstehen. "4K" bedeutet, dass die Auflösung in der Größenordnung von 4000 Pixeln pro Zeile liegt, also z. B. 3840, 4096 oder dergleichen. Besonders bevorzugt umfassen die Videodaten auch Videodaten mit einer Auflösung von 8K (ca. 8000 Pixel pro Zeile). Dies ist besonders vorteilhaft, um eine Detailgetreue Darstellung auch auf größeren Anzeigemitteln zu erzielen.

Vorzugsweise wird jeweils einem Datenstrom von Videodaten mittels der Framebuffer-Steuerung eine Position im Framebuffer zugewiesen, sodass die Anordnung der Videodaten der jeweiligen Datenströme in einem Frame definiert ist. Die Framebuffer-Steuerung steuert dabei - besonders bevorzugt nach Vorgabe eines Benutzers - also mittels der jeweiligen Position, an der die Frames der einzelnen ursprünglichen Videosignale jeweils im Framebuffer hinterlegt werden, auch die Position im resultierenden, kombinierten Videoframe. Die einzelnen Videosignale können somit vorteilhafterweise je nach Bedarf kombiniert werden.

Der Framebuffer ist bevorzugt als Multi-Layer-Framebuffer ausgebildet. In dem Multi-Layer-Framebuffer können mehrere Layer bzw. Bildschichten zugleich mittels der Framebuffer-Steuerung und der Framebuffer-Schnittstelle gespeichert und abgerufen werden. Die Framebuffer-Steuerung umfasst dabei bevorzugt eine Layer-Steuerung, die z. B. mittels Alpha-Blending aus den einzelnen Schichten ein neues, auszulesendes Videosignal generiert. Hierzu werden zumindest zwei Bildschichten benötigt, z. B. eine Vordergrundschicht und eine Hintergrundschicht. Es können jedoch noch weitere Bildschichten im Framebuffer ausgebildet sein, wie z. B. eine Schicht für einen Mauszeiger, wie folgend noch beschrieben wird.

Die integrierte Schaltanordnung umfasst bevorzugt eine Mauszeiger-Steuereinheit, die ein Bild eines Mauszeigers bereitstellt und es definierten Positionen im Framebuffer zuweist. Mauszeiger-Steuereinheit stellt besonders bevorzugt eine Anzahl von Bild eines Mauszeigers bereit, die je nach Kontext ausgewählt werden, z. B. wird im Normalzustand ein normaler Mauszeiger gewählt, im Ladezustand ein Ladesymbol bzw. Wartesymbol als Mauszeiger oder dergleichen.

Der Mauszeiger wird bevorzugt in Abhängigkeit von einer Benutzereingabe, insbesondere einer Mauseingabe, einer Position im Framebuffer zugewiesen. Wenn der Framebuffer als Multi-Layer-Framebuffer ausgebildet ist, wird der Mauszeiger bzw. sein Bild bevorzugt an der entsprechenden Position in der ihm zugewiesenen Bildschicht hinterlegt. Diese Benutzereingabe wird der Mauszeiger-Steuereinheit und folgend dem Framebuffer z. B. durch ein mit einem (Proxy-)Prozessor verbundenes Eingabegerät, insbesondere mittels eines über Ethernet übertragenen USB-Signals vermittelt, wie später noch detaillierter erläutert wird. Dadurch kann vorteilhafterweise auch eine Anzeige einer Benutzerschnittstelle im kombinierten Videosignal ermöglicht werden.

Zusätzlich oder alternativ weist die integrierte Schaltanordnung vorzugsweise eine Fenster-Steuereinheit auf, die bei einem Verschieben der Position eines Datenstroms von Videodaten im Framebuffer, die freiwerdenden Positionen zurücksetzt.

Mittels der Fenster-Steuereinheit wird also vorteilhafterweise sichergestellt, dass nur aktuelle Informationen, in dem kombinierten Videosignal enthalten sind. Dies kann beispielsweise dadurch erfolgen, dass die entsprechenden Positionen auf einen Hintergrundwert gesetzt werden bzw. dadurch, dass ein Alphawert des zuvor hinterlegten Videosignals auf null gesetzt wird.

Das Adressierungsschema wird bevorzugt für das gesamte Netzwerk bei der Auslegung bzw. Einrichtung des Netzwerks festgelegt. Es umfasst bevorzugt eine interne Komponentenadresse, mittels der die Route für den Austausch der Datenströme über die Verbindungsmatrix festgelegt ist. Das Adressierungsschema umfasst bevorzugt zudem eine Netzwerkadresse, mittels derer zumindest eine Route für den Austausch des jeweiligen Datenstroms über das Netzwerk festgelegt ist.

Bevor die Daten eines Datenstroms bzw. eines Datenpakets eine Komponente verlassen, wird die Komponentenadresse auf die Adresse der nächsten Zielkomponente des Netzwerkgeräts gesetzt. Dies kann für einen Teil der Komponenten beispielsweise statisch erfolgen, d. h. Daten aus dieser Komponente werden fortlaufend nur an die angegebene Zielkomponente gesendet. Dabei kann die Zielkomponente bei Bedarf jedoch auch umkonfiguriert werden. Andere Komponenten, wie z. B. die Netzwerkschnittstellen oder die Ethernet-Schnittstelle, können die Komponentenadresse basierend auf der Netzwerkadresse bzw. auf einer Ethernet-Adresse - z. B. anhand von Lookup-Tabellen. setzten. Für Videodatenströme die aus Videoquellen neu in das Netzwerk eingebracht werden, wird sowohl die Netzwerkadresse als auch die Komponentenadresse in der Videoschnittstelle gesetzt.

Je nach Anwendungsfall besteht der Bedarf, das Videosignal einer Videoquelle zu mehreren Videosenken oder ganz allgemein ein Signal zu mehreren Zielorten zu übertragen und dort gegebenenfalls auszugeben. Bevorzugt wird ein Datenstrom bei Bedarf gemäß dem Adressierungsschema dupliziert, um an mehrere Ziele im Netzwerk versendet zu werden. Während für die Übertragung an eine einzelne Videosenke in dem Adressierungsschema sogenannte "Uni-Cast-Adressen" vorgesehen sind, werden für die Übertragung eines Videosignals von einer Videoquelle an mehrere Videosenken sogenannte "Multi-Cast-Adressen" bereitgestellt. Eine Multi-Cast-Adresse ordnet dem entsprechenden Signal nicht nur eine Route zu, sondern gibt einen von der Videosignalquelle ausgehenden Übertragungsbaum bzw. eine Verzweigungskarte an. Das Signal wird hierzu beispielsweise in einer entsprechend angegebenen Netzwerkschnittstelle dupliziert bzw. multipliziert und dann auf den unterschiedlichen durch das Adressierungsschema festgelegten Routen ggf. mit weiteren Verzweigungen versendet.

Mit anderen Worten regelt das Adressierungsschema also das Routing und gegebenenfalls auch die Duplizierung von Datenströmen im Netzwerk. Zusätzliche Geräte wie Router oder Switches sind somit nicht erforderlich, da diese Funktionalität bereits von dem erfindungsgemäßen integralen Netzwerkgerät bzw. dessen integrierter Schaltanordnung umfasst ist.

Die integrierte Schaltanordnung umfasst bevorzugt eine Ethernet-Schnittstelle zum Empfangen und/oder Versenden von Ethernet-Daten und eine Ethernet-Steuereinheit, welche die Ethernet-Daten entsprechend dem Adressierungsschema versendet.

Das Adressierungsschema umfasst vorzugsweise eine Übersetzung von Ethernet-Adressen in Netzwerkadressen bzw. Komponentenadressen, z. B. in Form einer Ethernet-Lookup-Tabelle. Das heißt, die Ethernet-Adresse wird für die Übertragung im erfindungsgemäßen Netzwerk in das Adressierungsschema des erfindungsgemäßen Netzwerks konvertiert.

Dabei umfassen die Ethernet-Daten besonders bevorzugt HID-Daten (Human Interface Device) von USB-Geräten mit jeweils bekannten Profilen. Grundsätzlich sieht der USB-Standard aufgrund der in ihm festgelegten Antwortzeiten zwar keine Kompatibilität für die Übertragung per Ethernet vor; bei bekannten Profilen der USB-Daten - d. h. beispielsweise das Profil einer Tastatureingabe oder einer Mauseingabe - ist es möglich, die entsprechenden Antworten zu simulieren, um den Aufbau bzw. Abbau einer USB-Verbindung zu steuern und das wiederholte Senden der USB-Pakete zu vermeiden. Diese Schritte werden bevorzugt mittels einer entsprechenden Software realisiert, die jeweils auf einem Prozessor eines Netzwerkgerätes ausgeführt wird. Somit können vorteilhafterweise auch HID-Daten mit bekannten Profilen in Form von Ethernet-Daten über das erfindungsgemäße Netzwerk übertragen werden. Das Netzwerkgerät umfasst somit also die Funktion eine KM-Switches (Keyboard-Mouse-Switch).

Das Netzwerkgerät umfasst vorzugsweise einen Framebuffer, in dem zumindest ein Frame von Videodaten zwischengespeichert werden kann, bevor er mittels einer Videoschnittstelle und/oder einer Netzwerkschnittstelle versendet wird. Der Framebuffer ist dabei über die Framebuffer-Schnittstelle mit der integrierten Schaltanordnung verbunden und wird mittels der Framebuffer-Steuerung, wie zuvor bereits beschrieben, angesteuert.

Bevorzugt umfasst das Netzwerkgerät einen Prozessor, der mittels einer Ethernet-Schnittstelle mit der integrierten Schaltanordnung verbunden ist. Er konfiguriert unter anderem je nach Bedarf das Adressierungsschema und/oder Parameter für die Bildverarbeitung mittels einer von der integrierten Schaltanordnung umfassten UDP-Einheit.

Der Prozessor verarbeitet z. B. Benutzereingaben und sendet entsprechende UDP-Daten mittels einer Ethernet-Verbindung über die Ethernet-Schnittstelle an die UDP-Einheit. Die UDP-Einheit übersetzt die UDP-Daten in ein geeignetes Format für Schreibzugriffe auf der Verbindungsmatrix bzw. auf die anderen Komponenten des Netzwerkgeräts.

Entsprechende Anweisungen zur Umkonfigurierung des Adressierungsschemas oder der Parameter für die Bildbearbeitung können als UDP-Daten, wie andere Ethernet-Daten auch, mittels des Netzwerks an die Netzwerkgeräte bzw. an das jeweilige Ziel-Netzwerkgerät übertragen werden.

Aus Sicherheitsgründen kann es wünschenswert sein, dass die beschriebene Steuerung bzw. Konfiguration des Netzwerkes lediglich mittels eines Netzwerkgerätes erfolgt. Dieses Netzwerkgerät wird als Proxy-Netzwerkgerät bezeichnet und ist mit einer externen Recheneinheit mittels der Ethernet-Schnittstelle verbunden. Ein Benutzer gibt also Befehle zur Steuerung des Netzwerkes, d. h. insbesondere für das Routing der Videosignale und/oder der Steuerung der Videosignalquellen, mittels der Recheneinheit an das Proxy-Netzwerkgerät. Das Proxy-Netzwerkgerät leitet die Befehle dann entsprechend des Adressierungsschemas weiter. Für einen Benutzer bleibt somit die im Netzwerk intern ablaufende Kommunikation verborgen. Die Kommunikation im Netzwerk mittels der Ethernet-Daten läuft bevorzugt zudem - abgesehen vom Proxy-Netzwerkgerät - entkoppelt von externen Netzwerken.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:
FIG 1 ein schematisches Blockdiagramm eines Ausführungsbeispiels eines erfindungsgemäßen Netzwerks,
FIG 2 ein schematisches Blockdiagramm eines Ausführungsbeispiels eines erfindungsgemäßen Netzwerkgerätes,
FIG 3 ein schematisches Blockdiagramm eines Ausführungsbeispiels einer erfindungsgemäßen Schaltanordnung,
FIG 4 die Schaltanordnung aus FIG 3 mit beispielhaften Routen für Videosignale und
FIG 5 ein schematisches Blockdiagramm zweier Netzwerkschnittstellen für eine erfindungsgemäße Schaltanordnung.

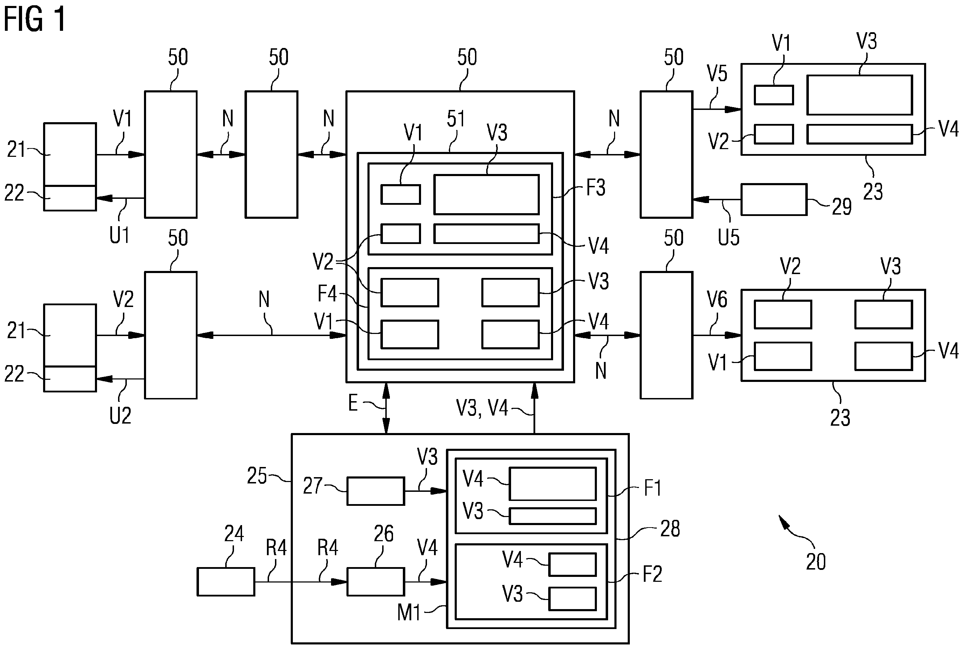

In FIG 1 ist beispielhaft ein erfindungsgemäßes Netzwerk 20 als Blockdiagramm dargestellt. Das Netzwerk 20 umfasst in diesem Ausführungsbeispiel sechs Netzwerkgeräte 50, die im Wesentlichen identisch ausgeführt sind. Es ist jedoch ohne weiteres möglich die Anzahl und die Anordnung der Netzwerkgeräte 50 je nach Bedarf bzw. Anwendungsfall anzupassen. Eines der Netzwerkgeräte ist mit einer Recheneinheit 25 bzw. einem Computer 25 verbunden. Es wird im Folgenden auch als Proxy-Netzwerkgerät 50 bezeichnet. Mittels der Rechnereinheit 25 können unter anderem Anweisungen zur Konfiguration des Netzwerkes 20 mittels einer Ethernet-Verbindung Ethernet-Daten E an das Netzwerkgerät 50 gesendet werden.

Zwei der Netzwerkgeräte 50 sind mit Videosignalquellen 21 verbunden. Die Videosignalquellen 21 kann beispielsweise als Kameras ausgeführt sein, es kann sich dabei aber auch zum Beispiel um Videosignale handeln die von Software generiert werden, aus medizintechnisch bildgebenden Modalitäten wie beispielsweise Röntgengeräten stammen oder auch von Messgeräten wie zum Beispiel einem EKG oder einem EEG als Videosignal ausgegeben werden.

Die Videosignalquellen 21 übermitteln ihre Videosignale V1, V2 an die jeweils mit ihnen verbundenen Netzwerkgeräte 50. Das Netzwerkgerät 50, an das das Videosignal V2 gesendet wird ist direkt mit dem Proxy-Netzwerkgerät 50 verbunden. Das Netzwerkgerät 50, an das das Videosignal V1 gesendet wird, ist indirekt über ein weiteres Netzwerkgerät 50 mit dem Proxy-Netzwerkgerät 50 verbunden. Die Videosignalquellen 21 weisen jeweils eine Steuereinheit 22 auf, an die von dem jeweils verbundenen Netzwerkgerät 50 USB-Daten U1, U2 gesendet werden, welche Steuerbefehle enthalten. Dadurch können Einstellungen, wie z. B. Fokuseinstellungen, Zoom-Einstellungen, Ausrichtungseinstellungen oder dergleichen, der Videosignalquellen 21 gesteuert werden.

Die Netzwerkgeräte 50 versenden untereinander Netzwerkdaten N. Bei den Netzwerkdaten N handelt es sich um spezielle Datenpakete, welche als Nutzdaten unter anderem die Videosignale V1, V2, V3, V4, Ethernet-Daten E, USB-Daten U1, U2 umfassen. Neben den Nutzdaten umfassende Netzwerkdaten N Sendungssteuerdaten, welche Adressdaten, Prüfsummen oder dergleichen umfassen.

Die Rechnereinheit 25 ist mit einer medizintechnisch bildgebenden Modalität 24 in Form eines Computertomografen 24 verbunden. Der Computertomograf 24 sendet Rohdaten R4 an die Rechnereinheit 25. In der Rechnereinheit 25 werden die Rohdaten R4 mittels einer Rekonstruktionseinheit 26 rekonstruiert und als Videosignal V4 an einen Framebuffer 28 weitergeleitet. In den Framebuffer 28 wird zusätzlich ein von einer Software generiertes Videosignal V3 gesendet. Die beiden Videosignale V3, V4 werden dabei in zwei unterschiedlichen Frames F1, F2 hinterlegt. Die beiden Frames F1 und F2 unterscheiden sich in der Skalierung der Videosignale V3, V4. Hier sind beispielhaft die Videosignale V3 und V4 im Frame F1 in horizontaler Richtung länglicher gestaltet es im Frame F2. Die Skalierung kann dabei je nach Bedarf von einem Benutzer eingestellt werden. Der Framebuffer 28 wird also mit einer jeweils am Videosignal vorliegenden Framerate beschrieben und gegebenenfalls mit einer anderen Framerate ausgelesen, wobei eine Arbitrationslogik etwaige Konflikte zwischen Lese- und Schreibzugriffen verhindern kann.

Die Videosignale V3, V4 bzw. die Frames F1, F2, von denen sie umfasst sind werden an das Proxy-Netzwerkgerät 50 gesendet. In dem Proxy-Netzwerkgerät 50 werden die Videosignale V3, V4 der Frames F1 und F2 im Framebuffer 51 mit den Videosignalen V1, V2 aus den anderen Videosignalquellen 21 zu den Frames F3, F4 zusammengeführt. Entsprechend den Benutzervorgaben sind die einzelnen Videosignale V1, V2, V3, V4 in den Frames F3, F4 skaliert.

Die Frames F3, F4 werden als kombiniertes Videosignal zum Versenden in Netzwerkdaten N gepackt und an Netzwerkgeräte 50 übermittelt, die mit Videosignalsenken 23 bzw. Ausgabemitteln 23 in Form von Monitoren, Displays oder dergleichen verbunden sind. Aus diesen Netzwerkgeräten 50 werden die Bildinhalte der Frames F3, F4 als kombinierte Videosignale V5, V6 an die Ausgabemittel 23 übersendet und dort als Video dargestellt. Das Netzwerkgerät 50, dass das Videosignal V5 ausgibt, ist zudem mit einem USB-Eingabegerät 29, wie beispielsweise einer Maus oder einer Tastatur, verbunden. Mit dem USB-Eingabegerät 29 können beispielsweise Steuerdaten als USB-Daten U5 erfasst werden, die je nach Bedarf mittels des Netzwerks 20 an die Steuereinheiten 22 der Videosignalquellen 21 übertragen werden.

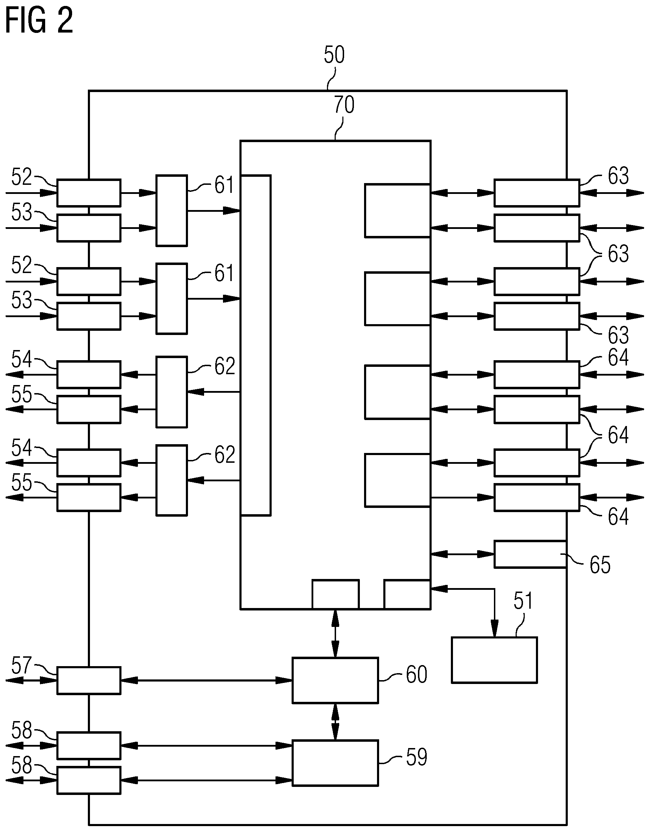

Mittels des erfindungsgemäßen Netzwerks 20 lassen sich somit Videosignale V1, V2, V3, V4 aus unterschiedlichen Videosignalquellen 21, 26, 27 je nach Bedarf erfassen, bearbeiten und/oder zusammenstellen, auf unterschiedlichen Routen durch das Netzwerk übertragen und durch einen Benutzer gewählten Videosenken 23 ausgeben. Die Funktion der Netzwerkgeräte 50 im folgendem Detail anhand von FIG 2 erläutert.

Das Netzwerk 20 ist gemäß seiner Auslegung ausgestaltet und somit eine bekannte Topologie auf. Dadurch lassen sich die Routen zwischen den Netzwerkgeräten 50, den von ihnen umfassten Komponenten und den mit ihnen verbundenen Komponenten ermitteln und in einem Adressierungsschema festhalten. Mittels des Adressierungsschemas kann somit die Route von einem Punkte des Netzwerkes 20 zu einem anderen Punkt des Netzwerkes 20 ermittelt und so die entsprechenden Datenströme je nach Bedarf weitergeleitet werden.

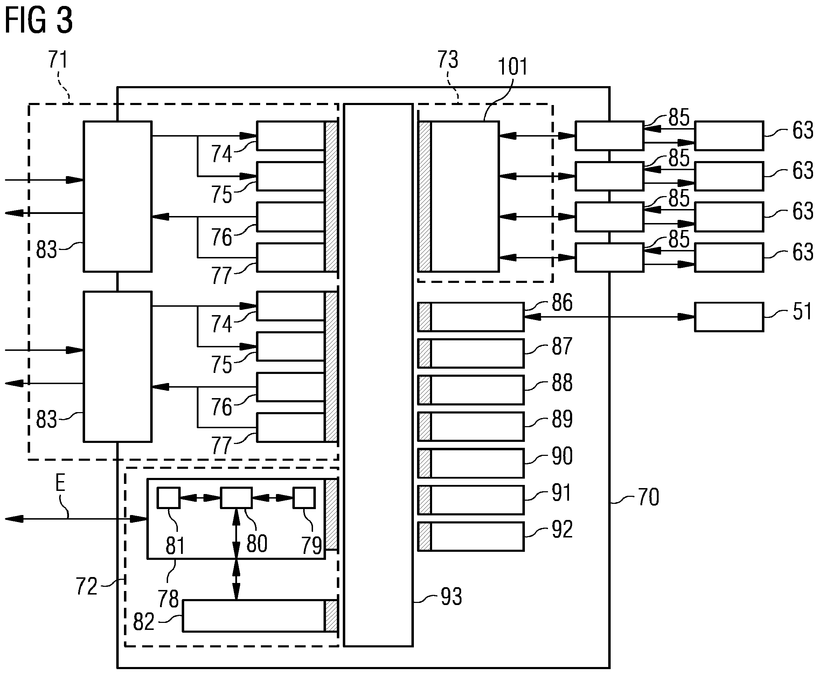

FIG 2 zeigt beispielhaft und schematisch ein erfindungsgemäßes Netzwerkgerät 50 als Blockschaltbild. Das Netzwerkgerät 50 umfasst als zentrale Komponente eine integrierte Schaltanordnung 70, die hier als ein integrierter Schaltkreis 70 insbesondere als ein FPGA, ausgeführt ist. Der integrierte Schaltkreis 70 wird im Detail noch anhand von FIG 3 beschrieben.

Das Netzwerkgerät 50 weist physikalische Steckanschlüsse 52, 53, 54, 55 für Videosignale auf. Zum Empfang von Videosignalen dienen zwei Displayport-Eingänge 52 sowie zwei HDMI-Eingänge 53. Dabei sind jeweils ein Displayport-Eingang 52 und ein HDMI-Eingang 53 mit einem gemeinsamen Multiplexer 61 verbunden, wobei nur einer der beiden Eingänge 52, 53 zur gleichen Zeit genutzt wird. Sowohl HDMI als auch Displayport weisen je vier Signal-Pins bzw. Lanes auf. Die Lanes des verwendeten Steckanschlusses 52 oder 53 werden mittels des Multiplexers 61 auf eine Signalleitung zusammengelegt und an den integrierten Schaltkreis 70 übertragen.

Umgekehrt gibt der integrierte Schaltkreis 70 ein gemultiplextes Videosignal an einen Demultiplexer 62 aus, der das zusammengelegte Videosignal entsprechend dem Standard des jeweils verbundenen Ausgang 54, 55 auf unterschiedliche Lanes aufgeteilt ausgibt. Zum Versenden der Videosignale sind je zwei Displayport-Ausgänge 54 und HDMI-Ausgänge 55 ausgebildet, wobei jeweils ein Displayport-Ausgang 54 und ein HDMI-Ausgang 55 mit einem gemeinsamen Demultiplexer 62 verbunden sind, aber nur einer der Ausgänge zur gleichen Zeit genutzt wird.

Die Displayport-Anschlüsse unterstützen dabei den sogenannten Display-Port-Multi-Stream (DP-MST), bei dem zumindest zwei Videosignal mittels eines Displayport-Anschlusses übertragen werden können.

Die beschriebene Ausgestaltung der Videosignaleingänge 52, 53 und Videosignalausgänge 54, 55 berücksichtigt, dass am Ort der Installation des Netzwerkes 20 häufig eine Anschlussart vorherrscht. Die Netzwerkgeräte 50 sollen grundsätzlich in einer Bauform auch an unterschiedlichen Orten eingesetzt werden, die ggf. unterschiedliche Anschlussarten benötigen. Andere Video-Steckanschlüsse, wie z. B. VGA, S-Video oder DVI können gegebenenfalls adaptiert werden.

Das Netzwerkgerät 50 weist ferner acht Netzwerkanschlüsse 63, 64 auf. Davon sind vier als SFP-Module 63 ausgestaltet und können je nach Bedarf mit SFP-Transceivern bestückt werden, um Kosten für die vergleichsweise teuren Transceiver zu sparen. Die SFP-Transceivern können je nach zu überbrückender Distanz als Single-Mode-Transceiver oder Multi-Mode-Transceiver ausgebildet sein und können je nach Bedarf z. B. Übertragungsraten von 5 Gbit/s oder 10 Gbit/s aufweisen. Die übrigen vier Netzwerkanschlüsse sind beispielhaft als PCIe-Anschlüsse 64 ausgestaltet, sodass das Netzwerkgerät 50 gegebenenfalls auch als Steckmodul in eine geeignete Vorrichtung, z. b. eine Recheneinheit oder eine medizintechnisch bildgebende Modalität eingebracht werden kann.

Die Anzahl der Videoanschlüsse 52, 53, 54, 55 und der Netzwerkanschlüsse 63, 64 des Netzwerkgerätes 50 ist im Wesentlichen von der Verarbeitungsleistung des integrierten Schaltkreises 70 abhängig und kann im Übrigen bei der Auslegung des Netzwerkgerätes 50 beliebig gewählt werden.

Zusätzlich weist das Netzwerkgerät 50 einen Erweiterungsslot 65 auf, der je nach Bedarf als Full-HD-Ausgang, SPDIF-Audioausgang, für ältere Videostandards (S-Video, FBAS), als UART- oder CAN-Anschluss oder für binäre Inputs und/oder Outputs genutzt werden kann.

Das Netzwerkgerät 50 weist außerdem einen Framebuffer 51 in Form eines oder mehrerer DDR-RAM-Module auf, der als Multi-Layer-Framebuffer ausgestaltet ist. Die Verwaltung des Framebuffers 51 wird im Detail noch anhand von FIG 3 beschrieben.

Des Weiteren umfasst das Netzwerkgerät 50 einen Prozessor 59, der einerseits mit einem Ethernet-Switch 60 verbunden ist, andererseits mit zwei USB-Ports 58. Einer der USB-Ports 58 ist mit dem Geräteanschluss des Prozessors 59 verbunden, wobei der Prozessor mittels Software ein USB-Eingabegerät emuliert, dass die über das Netzwerk 20 empfangen USB-Daten U1, U2 (mit bekanntem Profil) an anzusteuernde Geräte ausgibt. Der andere USB-Port 58 ist mit dem Host-Anschluss des Prozessors 59 verbunden und wandelt die von einem Eingabegerät empfangenen USB-Daten U3 (mit bekanntem Profil) in Ethernet-Daten E um, die als Netzwerkdaten N über das Netzwerk 20 versandt werden.

Der Ethernet-Switch 60 ist zusätzlich mit einem Ethernet-Anschluss 57 verbunden und tauscht darüber bidirektional Ethernet-Daten aus. Mittels des Ethernet-Switches 60 werden sowohl die Ethernet-Daten vom Ethernet-Anschluss 57 als auch die vom Prozessor 59 an den integrierten Schaltkreis 70 übermittelt.

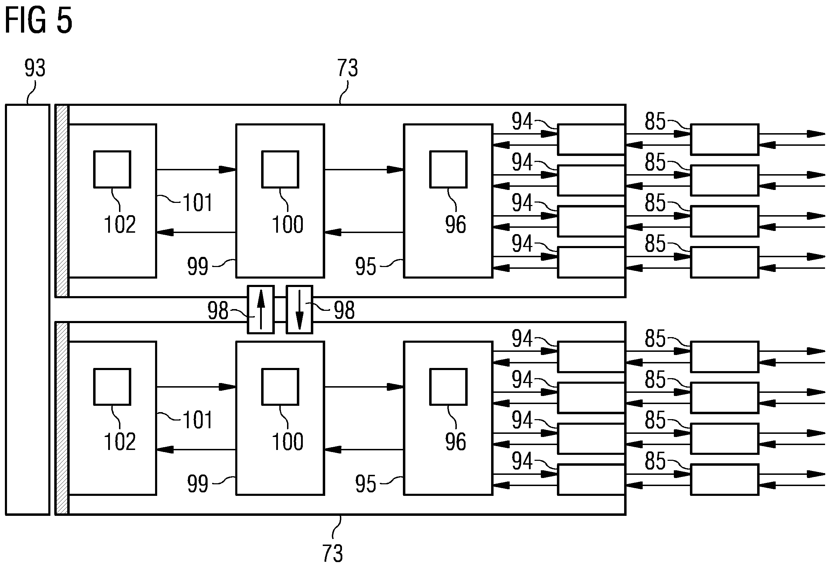

FIG 3 zeigt beispielhaft und schematisch einen erfindungsgemäßen integrierten Schaltkreis 70 in Form eines FPGA als Blockdiagramm. Der integrierte Schaltkreis 70 weist ein Videomodul 71, ein Ethernet-Modul 72 sowie ein Netzwerkmodul 73 auf. Die Ausgänge bzw. Eingänge der einzelnen Netzwerkschnittstellen 85 sind mit den als SFP-Transceiver ausgebildeten Netzwerkanschlüssen 63 des Netzwerkgerätes 50 verbunden. Das Netzwerkmodul 73 wird im Detail noch anhand von FIG 5 beschrieben.

Das Videomodul 71 weist zwei gleich ausgestaltete kombinierte Video-Eingangs-Ausgangs-Schnittstellen 83 auf, die jeweils mit einem Multiplexer 61 und einem Demultiplexer 62 des Netzwerkgeräts 50 verbunden sind. Mittels einer kombinierten Video-Eingangs-Ausgangs-Schnittstellen 83 kann zur gleichen Zeit entweder ein eingehendes oder ein ausgehendes Videosignal in die entsprechende Richtung weitergeleitet werden. Ein eingehendes Videosignal wird je nach dem ihm zugrundeliegenden Standard entweder an eine Displayport-Verbindungsmatrix-Eingangsschnittstelle 74 oder an eine HDMI-Verbindungsmatrix-Eingangsschnittstelle 75 weitergeleitet. Ein ausgehendes Videosignal wird entsprechend dem ihm zugrundeliegenden Standard und an einer anhand der Komponentenadresse des Adressierungsschemas definierten Displayport-Verbindungsmatrix-Ausgangsschnittstelle 76 oder an einer HDMI-Verbindungsmatrix-Ausgangsschnittstelle 77 über die Verbindungsmatrix 93 empfangen und über die damit verbundene kombinierte Video-Eingangs-Ausgangs-Schnittstelle 83 an den entsprechenden Demultiplexer 62 des Netzwerkgeräts 50 weitergeleitet.

Das Ethernet-Modul 72 umfasst eine Ethernet-Schnittstelle 78 sowie eine UDP-Schnittstelle. Die Ethernet-Schnittstelle 78 weist einen Ethernet-Filter 81 auf, der lediglich Ethernet-Daten E zu definierten Netzwerkadressen durchlässt, um nicht relevante Datenströme zu vermeiden.

Die Ethernet-Schnittstelle 78 weist ferner einen gepufferten Repeater 80 auf, der über die Weiterleitung der einzelnen Pakete der Ethernet-Daten E entscheidet. Ausgehende Ethernet-Daten E werden über den Ethernet-Filter 81 an den Ethernet-Switch 60 das Netzwerkgeräts 50 weitergeleitet, bei eingehenden Ethernet-Daten E wird entschieden, ob es sich um UDP-Daten handelt, die an eine UDP-Schnittstelle 82 weitergeleitet werden, oder ob es sich um Ethernet-Daten E handelt, die auf einer bestimmten Route im Netzwerk 20 weitergeleitet werden. Im letzteren Fall werden die Ethernet-Daten E basierend auf ihrer Ethernet-Adresse bzw. MAC-Adresse in einer Ethernet-Verbindungsmatrix-Schnittstelle 79 unter Verwendung einer Ethernet-Lookup-Tabelle mit einer Netzwerkadresse und einer Komponentenadresse versehen und dementsprechend über die Verbindungsmatrix 93 weitergeleitet.

Mittels dieser Ethernet-Schnittstelle 78 können auch die Prozessoren 59 der jeweiligen Netzwerkgeräte 50 in dem Netzwerk 20 miteinander kommunizieren.

Der integrierte Schaltkreis 70 weist ferner eine Framebuffer-Steuerung 87 und eine Framebuffer-Schnittstelle 86 auf. Dabei steuert die Framebuffer-Steuerung 87 Zugriffe auf den Framebuffer 51 des Netzwerkgeräts 50 mittels der Framebuffer-Schnittstelle 86 derart, dass Videodaten V1, V2, V3, V4, V5, V6, V7, V8 aus einem oder mehreren Datenströmen als ein kombinierter Frame F3, F4 von Videodaten in den Framebuffer 51 gespeichert und/oder aus dem Framebuffer 51 ausgelesen werden können.

Dazu wird jeweils einem Datenstrom von Videodaten V1, V2, V3, V4, V5, V6, V7, V8 mittels der Framebuffer-Steuerung 87 eine Position im Framebuffer 51 zugewiesen, sodass die Anordnung der Videodaten der jeweiligen Datenströme in einem kombinierten Frame F3, F4 definiert ist. Die Framebuffer-Steuerung 87 steuert dabei - insbesondere nach Vorgabe eines Benutzers - also mittels der jeweiligen Position, an der die Frames der einzelnen ursprünglichen Videosignale V1, V2, V3, V4, V5, V6, V7, V8 jeweils im Framebuffer 51 hinterlegt werden, auch die Position im resultierenden, kombinierten Videoframe F3, F4.

Der integrierte Schaltkreis 70 umfasst zudem eine Mauszeiger-Steuereinheit 88, die mehrere Bilder (je nach Zustand normaler Mauszeiger, Ladesymbol etc.) eines Mauszeigers bereitstellt und es nach einer Benutzereingabe, z. B. mittels einer Maus oder Touchpad, definierten Positionen im Framebuffer 51 zuweist. Die Daten dieser Benutzereingabe können z. B. auch als Ethernet-Daten E über das Netzwerk an die Mauszeiger-Steuereinheit 88 übertragen werden.

Außerdem weist die integrierte Schaltanordnung 70 eine Fenster-Steuereinheit 89 auf, die bei einem Verschieben der Position eines Datenstroms von Videodaten V1, V2, V3, V4, V5, V6, V7, V8 im Framebuffer 51, die freiwerdenden Positionen zurücksetzt.

Mittels der Fenster-Steuereinheit 89 wird also sichergestellt, dass nur aktuelle Informationen, in dem kombinierten Videosignal enthalten sind. Dies kann beispielsweise dadurch erfolgen, dass die entsprechenden Positionen auf einen Hintergrundwert gesetzt werden bzw. dadurch, dass ein Alphawert des zuvor hinterlegten Videosignals auf null gesetzt wird. Dies ist möglich, da der Framebuffer 51 als Multi-Layer-Framebuffer 51 ausgestaltet ist. Wenn der Alphawert einer Bildschicht (Layer) auf null gesetzt wird werden die darunterliegenden Schichten sichtbar bzw. angezeigt.

Die Videobearbeitungseinheiten 90, 91, 92 können bei der Auslegung des integrierten Schaltkreises 70 bzw. bei dessen grundlegender Konfigurierung je nach Bedarf gewählt werden.

D.h. grundsätzlich ist es möglich, dass sowohl mehr als auch weniger der Videobearbeitungseinheiten eingesetzt werden. Videobearbeitungseinheiten des gleichen Typs können auch mehrfach vorhanden sein, z. B. um mehrere verschiedene Videosignale in ähnlicher Weise zu bearbeiten.

In diesem Ausführungsbeispiel sind eine Videobearbeitungseinheit als erste Skalierungseinheit 90, eine weitere als zweite Skalierungseinheit 91 und eine Videobearbeitungseinheit als (Farb-)Filtereinheit 92 ausgebildet.

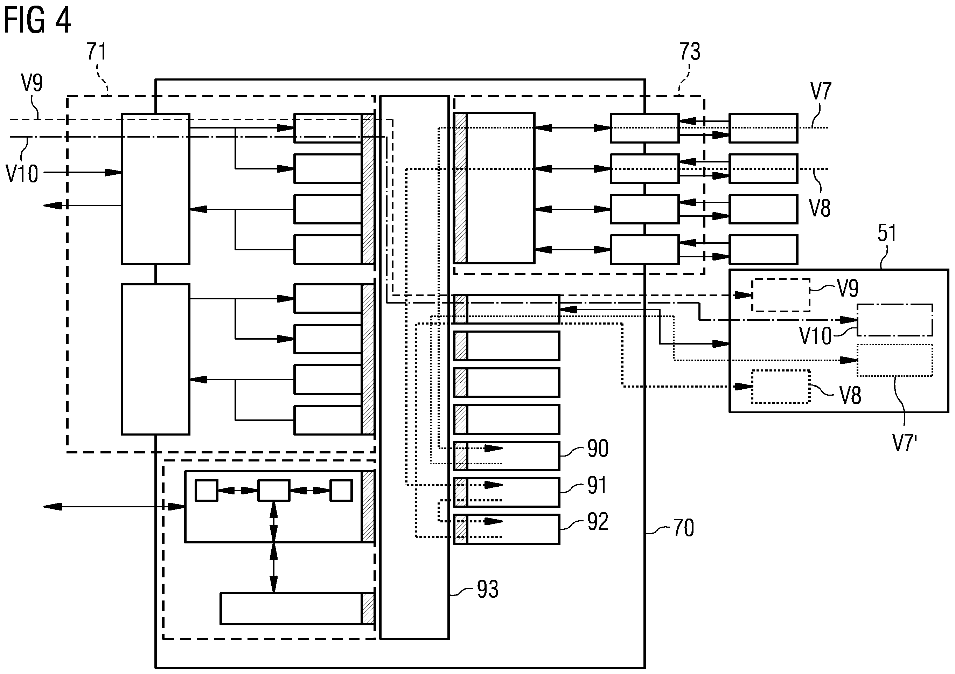

FIG 4 veranschaulicht beispielhaft die Routen unterschiedlicher Videosignale V7, V8, V9, V10 in dem integrierten Schaltkreis 70 aus FIG 3.

Ein erstes Videosignal V9 und ein zweites Videosignal V10 werden als Displayport-Multi-Stream (MST) empfangen und als einzelne Datenströme an die Framebuffer-Schnittstelle 86 weitergeleitet. Die Framebuffer-Schnittstelle 86 speichert das erste Videosignal V9 und das zweite Videosignal V10 nach Maßgabe der Framebuffer-Steuerung 87 an den entsprechenden Positionen im Framebuffer 51.

Ein drittes Videosignal V7 wird über eine erste Netzwerk Schnittstelle 85 empfangen und gemäß dem Adressierungsschema an eine Bildbearbeitungseinheit in Form einer ersten Skalierungseinheit 90 weitergeleitet. Die erste Skalierungseinheit 90 skaliert die Größe des dritten Videosignals V7 leitet es unter Änderung der Komponentenadresse weiter an die Framebuffer-Schnittstelle 86, welche das skalierte dritte Videosignal V7' an die ihm durch die Framebuffer-Steuerung 87 zugewiesene Stelle im Framebuffer 51 speichert.

Ein viertes Videosignal V8 wird über eine zweite Netzwerkschnittstelle 85 empfangen und gemäß dem Adressierungsschema an die zweite Skalierungseinheit 91 weitergeleitet. Die zweite Skalierungseinheit 90 skaliert die Größe des dritten Videosignals V7 und leitet es unter Änderung der Komponentenadresse weiter an die (Farb-)Filtereinheit 92. In der Farbfiltereinheit 92 werden beispielsweise die Blautöne aus dem Videosignal herausgefiltert und das Videosignal dann unter Änderung der Komponentenadresse an die Framebuffer-Schnittstelle 86 weitergeleitet, welche das skalierte und gefilterte vierte Videosignal V8' an die ihm durch die Framebuffer-Steuerung 87 zugewiesene Stelle im Framebuffer 51 speichert.

Der Framebuffer 51 kann dann insgesamt ausgelesen werden und stellt somit ein neues zusammengesetztes Videosignal bereit. Dieses kann über das Netzwerk 20 weiter versendet werden oder über eine der Videoschnittstellen 83 ausgegeben werden.

In FIG 5 sind beispielhaft zwei Netzwerkmodule 73 ähnlich dem in FIG 3 dargestellten Netzwerkmodul 73 dargestellt. Beide Netzwerkmodule 73 sind gleich aufgebaut und werden daher gemeinsam beschreiben.

Das Netzwerkmodul 73 ist mittels einer Netzwerk-Verbindungsmatrix-Schnittstelle 101 mit der Verbindungsmatrix 93 verbunden. Es empfängt darüber die Daten, die an seine Komponentenadresse gesendet werden und versendet darüber Daten an andere Komponentenadressen. Die Netzwerk-Verbindungsmatrix-Schnittstelle 101 weist Verbindungsmatrix-Lookup-Tabelle 102 auf, in der gespeichert ist, ob eine Route momentan aktiv ist oder nicht. Mittels der Konfiguration Verbindungsmatrix-Lookup-Tabelle 102 können somit auf einfach Art Routen aktiviert oder deaktiviert werden, ohne das Adressierungsschema selbst zu ändern.

Die Verbindungsmatrix-Schnittstelle 101 ist zur bidirektionalen Datenübertragung mit einer Routing-Einheit 99 verbunden. Die Routing-Einheit 99 entscheidet anhand des Adressierungsschemas mittels einer Routing-Lookup-Tabelle 100, an welche internen Komponentenadressen oder über welche Netzwerkschnittstelle 85 die eintreffenden Netzwerkdaten N versendet werden. D. h. für jede Gerät-externe Netzwerkadresse ist in der Routing-Lookup-Tabelle 100 festgelegt, über welche Netzwerkschnittstelle 85 die Daten versendet werden.

Wenn aus dem Netzwerk 20 eintreffende Daten gemäß dem Adressierungsschema direkt für eine Komponente des eigenen Geräts bestimmt sind oder eine sogenannte Multicast-Adresse auch für das eigene Gerät bestimmt ist, werden die Daten entsprechend des Adressierungsschemas mittels der Routing-Lookup-Tabelle 100 an die entsprechende Komponentenadresse des eigenen Geräts weitergeleitet bzw. dupliziert und weitergeleitet.

Wenn von der Verbindungsmatrix 93 eintreffende Daten für eine Komponente des eigenen Geräts bestimmt sind, was zum der Fall ist, wenn beispielsweise ein von einer Videoquelle eingehendes Signal eine Multicast-Adresse aufweist, wird das entsprechende Signal zum einen kopiert und an die interne Komponente weitergeleitet und zum anderen entsprechend der Multicast-Adresse und weitere Komponenten bzw. Netzwerkgeräte 50 weitergeleitet.

Wenn von der Verbindungsmatrix 93 eintreffende Daten für ein anderes Netzwerkgerät bestimmt sind, werden diese entsprechend des Adressierungsschemas mittels der Routing-Lookup-Tabelle 100 über die entsprechende Netzwerkschnittstelle 85 weitergeleitet.

Wenn über das Netzwerk 20 eintreffende Daten für ein anderes Netzwerkgerät bestimmt sind, werden diese entsprechend des Adressierungsschemas mittels der Routing-Lookup-Tabelle 100 an die entsprechende Netzwerkschnittstelle 85 weitergeleitet. Sollte es bei dieser Art der Weiterleitung erforderlich sein, dass die Daten über eine Netzwerkschnittstelle 85 versendet werden müssen, die nicht mit dem demselben Netzwerkmodul 73 verbunden ist, werden die Daten über eine direkte Modul-Verbindung 98 von der Routing-Einheit 99 an die Routing-Einheit 99 des jeweils anderen Moduls weitergeleitet und von dort wieder entsprechend das Adressierungsschema mittels der Routing-Lookup-Tabelle 100 über die entsprechende Netzwerkschnittstelle 85 versendet.

Das Netzwerkmodul 73 umfasst zudem eine Bündelungseinheit 95 die ebenfalls mit der Routing-Einheit 99. Damit kann je nach Bedarf die Datenrate von zwei oder mehr Netzwerkschnittstellen 85 gebündelt werden, um beispielsweise ein 4K-Videosignal unkomprimiert von einem Netzwerkgerät 50 zu einem anderen zu übertragen. Die Bündelungseinheit 95 kann beispielsweise 4 einzelne Netzwerkschnittstellen 85 zur einer virtuellen Schnittstelle mit entsprechend höherer Datenübertragungsrate bis zu 40 Gbit/s bündeln. Dabei regelt eine Bündelungssteuereinheit 96 der Bündelungseinheit 95 die Aufteilung der Daten auf die einzelnen Netzwerkschnittstellen 85 so, dass Daten, die wieder zusammengesetzt werden müssen, möglichst gleichzeitig am Ziel-Netzwerkgerät 50 eintreffen.

Schließlich werden die Daten jeweils mittels einer HSSL-Einheit 94 konvertiert und an die jeweilige Netzwerkschnittstelle 85 weitergeleitet.

Der erfindungsgemäße integrierte Schaltkreis 70 ermöglicht es somit, dass bereits ein erfindungsgemäßes Netzwerkgerät 50 die wesentlichen Schritte der Videotechnik realisieren kann. Somit können die Funktionen, die vorher von unterschiedlichen Geräten übernommen werden mussten, nun von den integrierten und im Wesentlichen einheitlichen erfindungsgemäßen Geräten übernommen werden.

Es wird abschließend noch einmal darauf hingewiesen, dass es sich bei den vorhergehend detailliert beschriebenen Vorrichtungen und Verfahren lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso schließt der Begriff "Einheit" nicht aus, dass diese aus mehreren Komponenten besteht, die - sofern nicht anders beschrieben - gegebenenfalls auch räumlich verteilt sein können. Bei den Netzwerkgeräten handelt es sich jedoch explizit um integrale Einheiten, die alle angegebenen Komponenten in einer konstruktiven Einheit umfassen.

## Patentansprüche

1. Integrierte Schaltanordnung (70), insbesondere FPGA oder ASIC, zur Bearbeitung und Übertragung von Daten, welche zumindest Videodaten (V1, V2, V3, V4, V5, V6, V7, V8, V9, V10) umfassen, in einem Netzwerk (20) aufweisend
- eine Anzahl von Videoschnittstellen (74, 75, 76, 77) zum Empfangen und/oder Versenden von Videodaten (V1, V2, V3, V4, V5, V6, V7, V8, V9, V10) in Datenströmen,
- eine Anzahl von Netzwerkschnittstellen (84, 85) zum Verbinden der integrierten Schaltanordnung (70) mit einer Anzahl von im Wesentlichen gleichen, räumlich getrennten, integrierten Schaltanordnungen (70) zur Übertragung von Daten (N), welche zumindest Videodaten (V1, V2, V3, V4, V5, V6, V7, V8, V9, V10) umfassen,
- eine Framebuffer-Steuerung (87) und eine Framebuffer-Schnittstelle (86), wobei die Framebuffer-Steuerung Zugriffe auf einen Framebuffer (51), insbesondere einen Multi-Layer-Framebuffer (51), mittels der Framebuffer-Schnittstelle (86) so steuert, dass Videodaten (V1, V2, V3, V4, V5, V6, V7, V8, V9, V10) aus einem oder mehreren Datenströmen als ein kombinierter Frame (F3, F4) von Videodaten (V1, V2, V3, V4, V5, V6, V7, V8, V9, V10) in den Framebuffer (51) gespeichert und/oder aus dem Framebuffer (51) ausgelesen werden können,
- eine Verbindungsmatrix (93), mit der Daten zwischen den zuvor genannten Komponenten ausgetauscht werden können,
wobei mittels eines konfigurierbaren Adressierungsschemas Routen einzelner Datenströme festgelegt sind.

2. Integrierte Schaltanordnung nach Anspruch 1 mit einer Anzahl von Videobearbeitungseinheiten (90, 91, 92), welche zur Bearbeitung der Videodaten (V1, V2, V3, V4, V5, V6, V7, V8, V9, V10) konfigurierbar sind,

3. Integrierte Schaltanordnung nach Anspruch 2, wobei die Videobearbeitungseinheiten (90, 91, 92) zur Skalierung, Ausschnitterzeugung, Filterung, Linienrekonstruktion, Komprimierung und/oder Dekomprimierung ausgebildet sind.

4. Integrierte Schaltanordnung nach einem der vorstehenden Ansprüche, wobei eine Datenrate der Netzwerkschnittstellen (84, 85) größer oder gleich 5 Gbit/s, bevorzugt größer oder gleich 10 Gbit/s, ist.

5. Integrierte Schaltanordnung nach einem der vorstehenden Ansprüche, wobei die Videodaten zumindest hochauflösenden Videodaten (V1, V2, V3, V4, V5, V6, V7, V8, V9, V10), bevorzugt ultrahochauflösende Videodaten, umfassen.

6. Integrierte Schaltanordnung nach einem der vorstehenden Ansprüche, wobei jeweils einem Datenstrom von Videodaten (V1, V2, V3, V4, V5, V6, V7, V8, V9, V10) mittels der Framebuffer-Steuerung (87) eine Position im Framebuffer (51) zugewiesen wird, sodass die Anordnung der Videodaten (V1, V2, V3, V4, V5, V6, V7, V8, V9, V10) der jeweiligen Datenströme in einem Frame definiert ist.

7. Integrierte Schaltanordnung nach einem der vorstehenden Ansprüche
- mit einer Mauszeiger-Steuereinheit (88), die ein Bild eines Mauszeigers bereitstellt und es definierten Positionen im Framebuffer zuweist und/oder
- mit einer Fenster-Steuereinheit (89), die bei einem Verschieben der Position eines Datenstroms von Videodaten (V1, V2, V3, V4, V5, V6, V7, V8, V9, V10) im Framebuffer (51), die freiwerdenden Positionen zurücksetzt.

8. Integrierte Schaltanordnung nach einem der vorstehenden Ansprüche mit einer Ethernet-Schnittstelle (78) zum Empfangen und/oder Versenden von Ethernet-Daten (E) und einer Ethernet-Steuereinheit (79), welche die Ethernet-Daten (E) entsprechend dem Adressierungsschema versendet, wobei die Ethernet-Daten (E) bevorzugt HID-Daten (U1, U2, U3) von USB-Geräten (22, 29) mit jeweils bekannten Profilen umfassen.

9. Integrierte Schaltanordnung nach einem der vorstehenden Ansprüche, wobei das Adressierungsschema eine interne Komponentenadresse umfasst, mittels der die Route für den Austausch der Datenströme über die Verbindungsmatrix (93) festgelegt ist, und das Adressierungsschema bevorzugt eine Netzwerkadresse umfasst, mittels der zumindest eine Route für den Austausch des jeweiligen Datenstroms über das Netzwerk (20) festgelegt ist und ein Datenstrom bevorzugt bei Bedarf gemäß dem Adressierungsschema dupliziert wird, um an mehrere Ziele im Netzwerk (20) versendet zu werden.

10. Netzwerkgerät (50) mit einer integrierten Schaltanordnung (70) nach einem der vorstehenden Ansprüche und physikalischen Schnittstellen (52, 53, 54, 55, 57, 58, 63,64), die mit den entsprechenden Schnittstellen (83, 78, 85) der integrierten Schaltanordnung (70) verbunden sind.

11. Netzwerkgerät nach Anspruch 10 mit einem Prozessor (59), der mittels eines Ethernet-Switches (60) mit der integrierten Schaltanordnung (70) verbunden ist und je nach Bedarf das Adressierungsschema und/oder Parameter für die Bildverarbeitung mittels einer UDP-Einheit (82) der integrierten Schaltanordnung (70) konfiguriert.

12. Netzwerk (20) mit einer Anzahl von Netzwerkgeräten (50) nach einem der Ansprüche 10 oder 11, welche in einer bekannten Netzwerktopologie miteinander verbunden sind.

13. Verfahren zur Bearbeitung und Übertragung von Daten, welche zumindest Videodaten (V1, V2, V3, V4, V5, V6, V7, V8, V9, V10) umfassen, in einem Netzwerk (20) umfassend folgende Schritte, welche mittels einer integrierten Schaltanordnung (70), insbesondere nach einem der Ansprüche 1 bis 9, implementiert sind:
- Empfangen und/oder Versenden von Videodaten (V1, V2, V3, V4, V5, V6, V7, V8, V9, V10) in Datenströmen,
- Verbinden der integrierten Schaltanordnung (70) mit einer Anzahl von im Wesentlichen gleichen, räumlich getrennten, integrierten Schaltanordnungen (70) in dem Netzwerk zur Übertragung von Daten, welche zumindest Videodaten (V1, V2, V3, V4, V5, V6, V7, V8, V9, V10) umfassen,
- Speichern und/oder Auslesen der Videodaten (V1, V2, V3, V4, V5, V6, V7, V8, V9, V10) aus einem oder mehreren Datenströmen als ein kombinierter Frame (F3, F4) von Videodaten (V1, V2, V3, V4, V5, V6, V7, V8, V9, V10) in einem Framebuffer (51), insbesondere in einem Multi-Layer-Framebuffer (51),
- Austausch der Daten zwischen Komponenten der integrierten Schaltanordnung mittels einer Verbindungsmatrix (93),
wobei mittels eines konfigurierbaren Adressierungsschemas Routen einzelner Datenströme festgelegt sind.

14. Computerprogrammprodukt mit einem Computerprogramm, welches direkt in eine integrierte Schaltanordnung (70) ladbar ist, mit Programmabschnitten, um alle Schritte des Verfahrens nach Anspruch 13 auszuführen, wenn die integrierte Schaltanordnung (70) mittels des Computerprogramms konfiguriert ist.

15. Computerlesbares Medium, auf welchem auf eine integrierten Schaltanordnung (70) programmierbare Programmabschnitte gespeichert sind, im Betrieb um alle Schritte des Verfahrens nach Anspruch 13 auszuführen, wenn die integrierte Schaltanordnung (70) mittels der Programmabschnitte konfiguriert ist.
